(19)

Europäisches
Patentamt
European
Patent Office
Office européen
des brevets

(11) **EP 4 254 534 A1**

(12) **EUROPEAN PATENT APPLICATION**

(43) Date of publication:
04.10.2023 Bulletin 2023/40

(21) Application number: 23159646.1

(22) Date of filing: 02.03.2023

(51) International Patent Classification (IPC):
*H01M 4/04* (2006.01)   *H01M 4/36* (2006.01)
*H01M 4/38* (2006.01)   *H01M 4/583* (2010.01)
*H01M 4/62* (2006.01)   *H01M 10/0525* (2010.01)
*H01M 4/02* (2006.01)

(52) Cooperative Patent Classification (CPC):
H01M 4/0404; H01M 4/364; H01M 4/386;
H01M 4/583; H01M 4/622; H01M 10/0525;
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 03.03.2022  JP 2022032380

(71) Applicant: **Envision AESC Japan Ltd.
Zama-shi, Kanagawa 252-0012 (JP)**

(72) Inventors:
• **ONO, Tetsushi**
  **Zama-shi, 252-0012 (JP)**
• **AKAGAWA, Kazuhiro**
  **Zama-shi, 252-0012 (JP)**
• **NOGUCHI, Takehiro**
  **Zama-shi, 252-0012 (JP)**

(74) Representative: **Dennemeyer & Associates S.A.
Postfach 70 04 25
81304 München (DE)**

(54) **NEGATIVE ELECTRODE FOR NONAQUEOUS ELECTROLYTE SECONDARY BATTERIES AND NONAQUEOUS ELECTROLYTE SECONDARY BATTERY INCLUDING SAME**

(57)    Provided is a negative electrode for nonaqueous electrolyte secondary batteries including: a negative electrode active substance layer that includes a negative electrode active substance; and a binder, in which the negative electrode active substance includes a silicon-based active substance that contains SiOx (where x is a number satisfying $0.5 \leq x \leq 1.6$), and a carbon-based active substance, the binder contains a poly(meth)acrylic acid, a metal salt of poly(meth)acrylic acid, an alkyl ester of poly(meth)acrylic acid, or a mixture of multiple compounds selected from these compounds, a content of the silicon-based active substance relative to a total solid content of the negative electrode active substance layer is more than 10% by mass to less than 80% by mass, and a content of the binder relative to a total solid content of the negative electrode active substance layer is 2% by mass or more to less than 10% by mass.

EP 4 254 534 A1

**Description**

BACKGROUND

1. Technical Field

The present disclosure relates to a negative electrode for nonaqueous electrolyte secondary batteries and a nonaqueous electrolyte secondary battery including the negative electrode for nonaqueous electrolyte secondary batteries.

2. Related Art

A nonaqueous electrolyte secondary battery is put into practical use as a battery for vehicles such as a hybrid vehicle and an electric vehicle as well as a battery for portable electronic equipment such as a mobile terminal. As such a battery, a lithium ion secondary battery is particularly used widely. A lithium ion secondary battery is required to have a combination of various properties such as output properties, energy density, capacity, life, and high temperature stability. Particularly, improving the volume energy density of a battery and increasing the capacity is a pressing issue for reducing the size of a battery. Particularly, a lithium ion secondary battery for electric vehicles is required to have an improved energy density for further increasing the distance to empty. Therefore, a battery structure containing an electrode and an electrolytic solution has been variously improved.

It is known that black lead is used as a negative electrode active substance material for the lithium ion secondary battery. Since black lead is inexpensive, less in deterioration by the charge-discharge cycle of a battery, and high in safety, it is widespread. However, a known lithium ion secondary battery including a black lead material as a negative electrode active substance is not expected to have a further improved energy density. Therefore, a high-capacity negative electrode active substance material is being searched. As a high-capacity negative electrode active substance material, a silicon-based negative electrode active substance material (hereinafter, also sometimes referred to as an "Si-based negative electrode active substance material" or an "Si-based negative electrode active substance") including silicon and silicon oxide is drawing attention.

For example, the negative electrode for nonaqueous electrolyte secondary batteries proposed in JP-A-2015-198038 includes a negative electrode active substance that contains a silicon-based active substance made of SiOx (satisfying $0.5 \leq x \leq 1.6$) and a carbon-based active substance. At least a portion of the surface layer of this negative electrode active substance is covered with lithium carbonate. Also, WO 2021/053951 A discloses a negative electrode active substance that contains silicon compound particles ($Li_2SiO_3$). At least a portion of the surface of this negative electrode active substance is covered by a carbon layer. Furthermore, the surface layer of this negative electrode active substance contains a substance having a carboxylic acid structure.

SUMMARY

A negative electrode for nonaqueous electrolyte secondary batteries according to the present embodiment including: a negative electrode active substance layer that includes a negative electrode active substance; and a binder, in which the negative electrode active substance includes a silicon-based active substance that contains SiOx (where x is a number satisfying $0.5 \leq x \leq 1.6$), and a carbon-based active substance, the binder contains a poly(meth)acrylic acid, a metal salt of poly(meth)acrylic acid, an alkyl ester of poly(meth)acrylic acid, or a mixture of multiple compounds selected from these compounds, a content of the silicon-based active substance relative to a total solid content of the negative electrode active substance layer is more than 10% by mass to less than 80% by mass, and a content of the binder relative to a total solid content of the negative electrode active substance layer is 2% by mass or more to less than 10% by mass.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The theoretical capacity (4199 mAh/g) of silicon is larger than the theoretical capacity (372 mAh/g) of black lead. Based on this, JP-A-2015-198038 and WO 2021/053951 A propose to use silicon and a silicon compound in expectation of significant improvement in battery capacity. However, when silicon or a silicon compound is used as a negative electrode active substance for lithium ion secondary batteries, a phenomenon is sometimes observed in which the negative electrode expands during charging of a lithium ion secondary battery and shrinks during discharging. In this case, as charging and discharging of a battery is repeated, a binder for maintaining a contact between negative electrode active substance particles sometimes deteriorates, or the contact itself between active substance particles is sometimes lost. Therefore, it is difficult to achieve all of the increased capacity, enhanced energy density, and lengthened life of the lithium ion secondary battery including a negative electrode active substance that contains silicon or a silicon compound.

An object of the present disclosure is to use an Si-based negative electrode active substance thereby to increase the energy density of a nonaqueous electrolyte secondary battery, including a lithium ion secondary battery, and to improve the life (cycle characteristics) of a nonaqueous electrolyte secondary battery.

Means for Solving the Problems

An embodiment of the present disclosure includes: a negative electrode active substance layer that includes a negative electrode active substance; and a binder. The negative electrode active substance includes a silicon-based active substance that contains SiOx (where x is a number satisfying $0.5 \leq x \leq 1.6$), and a carbon-based active substance, the binder contains a poly(meth)acrylic acid, a metal salt of poly(meth)acrylic acid, an alkyl ester of poly(meth)acrylic acid, or a mixture of multiple compounds selected from these compounds, a content of the silicon-based active substance relative to a total solid content of the negative electrode active substance layer is more than 10% by mass to less than 80% by mass, and a content of the binder relative to a total solid content of the negative electrode active substance layer is 2% by mass or more to less than 10% by mass. It is preferred that the carbon-based active substance includes natural black lead, artificial black lead, hard carbon, soft carbon, or a mixture of multiple active substances selected from these active substances.

It is preferred that a content of the silicon-based active substance relative to a total solid content of the negative electrode active substance layer is 15% by mass or more to 60% by mass or less, and a content of the binder relative to a total solid content of the negative electrode active substance layer is 2.5% by mass or more to 8% by mass or less.

Further, it is preferred that a content of the silicon-based active substance relative to a total solid content of the negative electrode active substance layer is 15% by mass or more to 40% by mass or less, and a content of the binder relative to a total solid content of the negative electrode active substance layer is 2.5% by mass or more to 6% by mass or less.

Moreover, it is preferred that a content of the silicon-based active substance relative to a total solid content of the negative electrode active substance layer is 15% by mass or more to 20% by mass or less, and a content of the binder relative to a total solid content of the negative electrode active substance layer is 2.5% by mass or more to 3.8% by mass or less.

It is preferred that the negative electrode active substance layer further includes carbon nanotubes.

The carbon nanotubes are preferably single-walled carbon nanotubes.

It is preferred that a content of the carbon nanotubes relative to a total solid content of the negative electrode active substance layer is 0.01% by mass or more to 1% by mass or less.

It is also preferred that the binder further includes carboxymethyl cellulose or a metal salt of carboxymethyl cellulose.

Further, it is preferred that the silicon-based active substance further includes a lithium silicon compound.

Further another embodiment of the present disclosure is a nonaqueous electrolyte secondary battery that includes at least the negative electrode for nonaqueous electrolyte secondary batteries according to the one embodiment, a positive electrode for nonaqueous electrolyte secondary batteries, a separator, and a nonaqueous electrolyte.

The negative electrode for nonaqueous electrolyte secondary batteries of the present disclosure includes an Si-based negative electrode active substance that has a large theoretical capacity. This can increase the capacity of a nonaqueous electrolyte secondary battery that includes this negative electrode. Furthermore, a nonaqueous electrolyte secondary battery including the negative electrode for nonaqueous electrolyte secondary batteries of the present disclosure has a high energy density and a long life.

Embodiments of the present disclosure will be described below. A negative electrode for nonaqueous electrolyte secondary batteries according to one embodiment is a negative electrode for nonaqueous electrolyte secondary batteries that includes a negative electrode active substance layer containing a negative electrode active substance and a binder. The negative electrode active substance contains a silicon-based active substance that contains SiOx (where x is a number satisfying $0.5 \leq x \leq 1.6$), and a carbon-based active substance. The binder contains a poly(meth)acrylic acid, a metal salt of poly(meth)acrylic acid, an alkyl ester of poly(meth)acrylic acid, or a mixture of multiple compounds selected from the these compounds. The content of the silicon-based active substance relative to the total solid content of the negative electrode active substance layer is more than 10% by mass to less than 80% by mass. The content of the binder relative to the total solid content of the negative electrode active substance layer is 2% by mass or more to less than 10% by mass.

In the present embodiment, the nonaqueous electrolyte secondary battery is a battery that mainly contains an organic solvent-based electrolyte and that can repeat charging and discharging. An example of the nonaqueous electrolyte secondary battery is a lithium ion secondary battery. The nonaqueous electrolyte secondary battery includes, as its constituent member, a negative electrode for nonaqueous electrolyte secondary batteries.

The negative electrode used in the present embodiment is a thin plate-like or sheet-like battery member that has a negative electrode current collector, which is metal foil such as copper foil, and a negative electrode active substance layer. This negative electrode active substance layer is formed by rolling and drying a negative electrode active substance-containing mixture applied on the negative electrode current collector. That is, the negative electrode is constituted by a negative electrode current collector, and a negative electrode active substance layer that contains a negative electrode active substance applied on one surface or both surfaces of the negative electrode current collector. In the present embodiment, the negative electrode active substance layer preferably contains a negative electrode active substance and a binder. The negative electrode active substance is a substance used in a negative electrode, of substances involved in a reaction to generate electric energy. The binder is generally a substance that binds negative electrode active substance particles such that particulate negative electrode active substances are in electrical contact with one another.

In the present embodiment, the negative electrode active substance includes a silicon-based active substance that contains SiOx (where x is a number satisfying $0.5 \leq x \leq 1.6$), and a carbon-based active substance. The silicon-based active substance is a silicon oxide represented by the chemical formula SiOx. In the formula, x is a number satisfying $0.5 \leq x \leq 1.6$. The silicon-based active substance may be a single compound or a mixture of multiple compounds. The silicon-based active substance is preferably in the form of particles having a roughly uniform or ununiform size. The negative electrode active substance further preferably includes a lithium silicon compound. The lithium silicon compound is, for example, a compound that contains a lithium element and a silicon element represented by the chemical formula $Li_{4.4}Si$, $Li_{3.75}Si$, or $Li_4SiO_4$ (lithium silicate). The lithium silicon compound, which is a stable compound, does not deintercalate lithium during charging and discharging of a nonaqueous electrolyte secondary battery. Therefore, the volume change of the negative electrode active substance layer can be suppressed by using a combination of the silicon-based active substance, which is likely to cause volume change during charging and discharging of a nonaqueous electrolyte secondary battery, and the stable lithium silicon compound.

The negative electrode active substance further includes a carbon-based active substance. The carbon-based active substance is preferably natural black lead, artificial black lead, hard carbon, soft carbon, or a mixture of multiple substances selected from these substances. Here, black lead is a carbon material of hexagonal plate-like crystals. Black lead is sometimes referred to as, for example, plumbago or graphite. Natural black lead and artificial black lead include natural black lead and artificial black lead which are covered with amorphous carbon. Here, amorphous carbon is a carbon material that is amorphous as a whole and that has a structure containing randomly networked microcrystals which may have a structure partially similar to black lead. Amorphous carbon may have a structure partially similar to black lead. Examples of amorphous carbon include carbon black, coke, activated carbon, carbon fibers, hard carbon, soft carbon, and mesoporous carbon. When artificial black lead is used, the interlayer distance d value ($d_{002}$) is preferably 0.33 nm or more. The crystal structure of artificial black lead is generally thinner than that of natural black lead. When artificial black lead is used as the negative electrode active substance for nonaqueous electrolyte secondary batteries, particularly for lithium ion secondary batteries, the crystals of the artificial black lead need to have an interlayer distance that allows lithium ions to be inserted. The interlayer distance that allows lithium ions to be inserted and removed can be estimated by the d value ($d_{002}$). When the d value is 0.33 nm or more, lithium ions are inserted and removed without problems. In the present embodiment, the carbon-based active substance is preferably in the form of particles having a roughly uniform or ununiform size.

The content of the silicon-based active substance relative to the total solid content of the negative electrode active substance layer is particularly preferably more than 10% by mass to less than 80% by mass. When the content of the silicon-based active substance is excessively large, the volume change of the negative electrode active substance during charging and discharging of a nonaqueous electrolyte secondary battery increases. When the content of the silicon-based active substance is excessively small, the effect of increasing the energy density is unlikely to be obtained.

The above-described binder can bind the particles of the above-described negative electrode active substance to one another. This can achieve a good electrical contact among the particles of the negative electrode active substance. The binder preferably includes an alkyl ester of poly(meth)acrylic acid, a metal salt of poly(meth)acrylic acid, or poly(meth)acrylic acid, or a mixture of multiple polymers selected from those polymers. Examples of a suitable compound as the binder include polyacrylic acid, polymethacrylic acid, sodium polyacrylate, potassium polyacrylate, sodium polymethacrylate, potassium polymethacrylate, polyethyl acrylate, polyethyl acrylate, polybutyl acrylate, polymethyl methacrylate, polyethyl methacrylate, and polybutyl methacrylate. The binder may be a mixture of multiple compounds selected from these compounds. The content of the binder relative to the total solid content of the negative electrode active substance layer is preferably 2% by mass or more to less than 10% by mass. When the content of the binder is excessively large, the ratio of the active substance surface covered with the binder increases. Therefore, there is a risk that the ion conductivity or electronic conductivity will deteriorate. When the content of the binder is excessively small, there is a risk that the negative electrode active substance particles will fail to electrically contact one another in an appropriate manner.

Particularly preferably, the binder further includes, as its ingredient, carboxymethyl cellulose (referred to as "CMC"), which is a derivative of cellulose, or a metal salt of carboxymethyl cellulose (for example, sodium carboxymethylcellulose or potassium carboxymethylcellulose), in addition to the above-described compound. Carboxymethyl cellulose or a metal salt of carboxymethyl cellulose plays a role of stabilizing the above-described binder compound to also achieve a stable electrical contact of the negative electrode active substance. When CMC or a metal salt of CMC is further added as an ingredient of the binder, the content of CMC or a metal salt of CMC relative to the total solid content of the negative electrode active substance layer is preferably 0.05% by mass or more to 1.5% by mass or less, particularly preferably 0.08% by mass or more to 0.8% by mass or less, and further preferably 0.15% by mass or more to 0.30% by mass or less.

In the present embodiment, it is preferable that the content of the silicon-based active substance relative to the total solid content of the negative electrode active substance layer is 15% by mass or more to 60% by mass or less and that the content of the binder relative to the total solid content of the negative electrode active substance layer is 2.5% by mass or more to 8% by mass or less.

It is further preferable that the content of the silicon-based active substance relative to the total solid content of the negative electrode active substance layer is 15% by mass or more to 40% by mass or less and that the content of the binder relative to the total solid content of the negative electrode active substance layer is 2.5% by mass or more to 6% by mass or less.

It is still further preferable that the content of the silicon-based active substance relative to the total solid content of the negative electrode active substance layer is 15% by mass or more to 20% by mass or less and that the content of the binder relative to the total solid content of the negative electrode active substance layer is 2.5% by mass or more to 3.8% by mass or less.

The energy density of a nonaqueous electrolyte secondary battery can be improved by adequately adjusting the contents of the silicon-based active substance and the binder.

The negative electrode active substance layer may further include a conductive agent. The conductive agent is a material for reducing the resistance of an electrode. Examples of the conductive agent include carbon fibers such as carbon nanofibers, carbon black such as acetylene black or Ketjen black, and carbon materials such as activated carbon, black lead, mesoporous carbon, fullerenes, and carbon nanotubes. In the present embodiment, carbon nanotubes (referred to as "CNT") are particularly preferably used as the conductive agent. CNT is a substance having a mono-layer or multi-layer coaxial tube structure that contains a six-membered network of carbon atoms (graphene). CNT includes single-walled carbon nanotubes (single layer, referred to as "SWNT") and multi-walled carbon nanotubes (multiple layers, referred to as "MWNT"). In the present embodiment, either CNT may be used. In a particularly preferred embodiment, SWNT is used as the conductive agent.

When CNT is used as the conductive agent, the content of CNT relative to the total solid content of the negative electrode active substance layer is preferably 0.01% by mass or more to 1% by mass or less, particularly preferably 0.03% by mass or more to 0.8% by mass or less, and further preferably 0.1% by mass or more to 0.5% by mass or less.

In addition, the negative electrode active substance layer can appropriately include an electrode additive commonly used for forming an electrode, such as a thickener, a dispersant, or a stabilizer.

A nonaqueous electrolyte secondary battery according to the present embodiment includes at least the above-described negative electrode for nonaqueous electrolyte secondary batteries, a positive electrode for nonaqueous electrolyte secondary batteries, a separator, and a nonaqueous electrolyte.

The nonaqueous electrolyte secondary battery according to the present embodiment includes, as its constituent member, at least a negative electrode for nonaqueous electrolyte secondary batteries, a positive electrode for nonaqueous electrolyte secondary batteries, a separator, and a nonaqueous electrolyte.

The positive electrode used in the present embodiment is a thin plate-like or sheet-like battery member that has a positive electrode current collector, which is metal foil such as aluminum foil, and a positive electrode active substance layer. This positive electrode active substance layer is formed by rolling and drying a positive electrode active substance-containing mixture applied on the positive electrode current collector. That is, the positive electrode is constituted by a positive electrode current collector, and a positive electrode active substance layer that contains a positive electrode active substance applied on one surface or both surfaces of the positive electrode current collector. In the present embodiment, the positive electrode active substance layer preferably contains a positive electrode active substance and a binder. The positive electrode active substance is a substance used in a positive electrode, of substances involved in a reaction to generate electric energy. The binder is generally a substance that binds positive electrode active substance particles such that particulate positive electrode active substances are in electrical contact with one another.

A positive electrode active substance used in the present embodiment preferably includes a lithium-nickel-based composite oxide as a positive electrode active substance. The lithium-nickel-based composite oxide is a transition metal composite oxide that contains lithium and nickel, represented by the general formula $Li_xNi_yMe_{(1-y)}O_2$ (where Me

is at least one or more metals selected from the group consisting of Al, Mn, Na, Fe, Co, Cr, Cu, Zn, Ca, K, Mg, and Pb). Particularly preferably, the positive electrode active substance includes a lithium-manganese-based composite oxide. Examples of the lithium-manganese-based composite oxide include a lithium manganese oxide ($LiMnO_2$) having a zigzag layered structure and a spinel-type lithium manganese oxide ($LiMn_2O_4$). Also, the positive electrode active substance particularly includes a lithium nickel manganese cobalt composite oxide that is represented by the general formula $Li_xNi_yCo_zMn_{(1-y-z)}O_2$ and that has a layered crystal structure. Here, x in the general formula is $1 \leq x \leq 1.2$. y and z are a positive number satisfying $y + z < 1$. The value of y is 0.5 or more. It is noted that when the ratio of manganese increases, a single-phase composite oxide is unlikely to be synthesized. Therefore, it is desirable that the relationship of $1 - y - z \leq 0.4$ be satisfied. Particularly preferably, the relationship of $y > 1 - y - z$ and $y > z$ is satisfied for obtaining a high capacity battery. That is, the lithium-nickel-based composite oxide represented by this general formula is a lithium-nickel-cobalt-manganese composite oxide (hereinafter, sometimes referred to as "NCM"). NCM is a lithium-nickel-based composite oxide which is suitably used for increasing the capacity of a battery. For example, a composite oxide represented by the general formula $Li_xNi_yCo_zMn_{(1.0-y-z)}O_2$ when x = 1, y = 0.8, and z = 0.1 is referred to as "NCM811". A composite oxide when x = 1, y = 0.5, and z = 0.2 is referred to as "NCM523".

Examples of a binder for forming the positive electrode active substance layer together with the positive electrode active substance include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene butadiene rubber (SBR), butadiene rubber (BR), chloroprene rubber (CR), isoprene rubber (IR), and acrylonitrile butadiene rubber (NBR), and polysaccharides such as carboxymethyl cellulose (CMC), xanthan gum, guar gum, and pectin.

The positive electrode active substance layer may include a conductive agent in some cases. Examples of the conductive agent used in some cases include carbon fibers such as carbon nanofibers, carbon black such as acetylene black or Ketjen black, and carbon materials such as activated carbon, black lead, mesoporous carbon, fullerenes, and carbon nanotubes. In addition, the positive electrode active substance layer can appropriately include an electrode additive commonly used for forming an electrode, such as a thickener, a dispersant, or a stabilizer.

The nonaqueous electrolyte secondary battery according to the present embodiment includes a separator as a constituent member. As the separator, for example, a polyolefin film can be used. Polyolefin refers to a polymer compound that is obtained by polymerizing or copolymerizing $\alpha$-olefin such as ethylene, propylene, butene, pentene, or hexene. Examples of polyolefin include polyethylene, polypropylene, polybutene, polypentene, and polyhexene, as well as copolymers thereof. When a polyolefin film is used as the separator, a structure having holes to be blocked when the battery temperature rises, i.e., a porous or microporous polyolefin film, is suitably used. When the polyolefin film has such a structure, the separator can be blocked (shut down) so that the ion flow is cut off, even if the battery temperature rises. That is, a uniaxially stretched polyolefin film shrinks when the battery is heated, and blocks the holes. This can prevent a short circuit between the positive and negative electrodes. For exerting the shutdown effect, a porous polyethylene film is extraordinarily preferably used.

Also, a crosslinked film can be used as the separator. A porous or microporous polyolefin film has the characteristic of shrinking when heated. Therefore, a film shrinks when a battery is overheated, so that the ion flow is shut down. However, when the thermal shrinkage of a film is extremely large, the area of the film changes to a large extent. This can rather cause the occurrence of a large current flow. A crosslinked polyolefin film has an appropriate thermal shrinkage. Therefore, when overheated, a crosslinked polyolefin film can shrink to an extent that is needed for blocking holes, without drastically changing the area

The separator used in the present embodiment may have a heat-resistant fine particle layer on one surface or both surfaces of the separator. The heat-resistant fine particle layer disposed for preventing the overheating of a battery has a heat resistance with a heat resistant temperature of 150°C or higher and is constituted by inorganic fine particles which are stable in an electrochemical reaction. Examples of such inorganic fine particles include inorganic oxides such as silica, alumina ($\alpha$-alumina, $\beta$-alumina, and $\theta$-alumina), iron oxide, titanium oxide, barium titanate, and zirconium oxide, and minerals such as boehmite, zeolite, apatite, kaolin, spinel, mica, and mullite.

The nonaqueous electrolyte secondary battery according to the present embodiment includes a nonaqueous electrolyte. The nonaqueous electrolyte is an electrically conductive substance obtained by dissolving an ionic substance in an organic solvent. In the present embodiment, the separator is disposed between the negative electrode for nonaqueous electrolyte secondary batteries and the positive electrode for nonaqueous electrolyte secondary batteries described above, which are superimposed on each other. These electrodes, the separator, and a nonaqueous electrolyte secondary battery element that contains the nonaqueous electrolyte are one unit of the main constituent members of the nonaqueous electrolyte secondary battery. Usually, a stacked product that contains a plurality of negative electrodes for nonaqueous electrolyte secondary batteries and a plurality of positive electrodes for nonaqueous electrolyte secondary batteries, which are superimposed on one another through a plurality of separators, is immersed in a nonaqueous electrolyte. The nonaqueous electrolyte usable in the present embodiment is mainly a nonaqueous electrolytic solution. An example of this nonaqueous electrolytic solution is a mixture that contains linear carbonate such as dimethyl carbonate (DMC), diethyl carbonate (DEC), ethyl methyl carbonate (EMC), di-n-propyl carbonate, di-t-propyl carbonate, din-butyl carbonate, di-isobutyl carbonate, or di-t-butyl carbonate, and cyclic carbonate such as propylene carbonate (PC) or ethylene carbonate (EC). The nonaqueous electrolytic solution is prepared by dissolving, in such a carbonate mixture, a lithium salt such as lithium hexafluorophosphate ($LiPF_6$), lithium fluoroborate ($LiBF_4$), or lithium perchlorate ($LiClO_4$).

The nonaqueous electrolytic solution may further include, as an additive, a cyclic carbonate compound that is different from the above-described cyclic carbonate. An example of the cyclic carbonate used as an additive is vinylene carbonate (VC). Also, a cyclic carbonate compound that has halogen may be used as an additive.

These cyclic carbonates are also a compound that forms a protective coat of the negative electrode for nonaqueous electrolyte secondary batteries and the positive electrode for nonaqueous electrolyte secondary batteries in the charging and discharging process of the nonaqueous electrolyte secondary battery. Particularly, these cyclic carbonates can prevent the later-described attack by a sulfur-containing compound such as a disulfonic acid compound or a disulfonic acid ester compound on the positive electrode active substance that contains a lithium-nickel-based composite oxide. Examples of the cyclic carbonate compound that has halogen include fluoroethylene carbonate (FEC), difluoroethylene carbonate, trifluoroethylene carbonate, chloroethylene carbonate, dichloroethylene carbonate, and trichloroethylene carbonate. Fluoroethylene carbonate is particularly preferably used.

The nonaqueous electrolytic solution may further include, as an additive, a disulfonic acid compound. The disulfonic acid compound is a compound that has two sulfo groups in one molecule. This disulfonic acid compound encompasses a disulfonic acid salt compound that contains a sulfo group forming a salt together with a metal ion or a disulfonic acid ester compound that contains a sulfo group forming an ester. One or two of the sulfo groups of the disulfonic acid compound may form a salt together with a metal ion or may form an anion. Examples of the disulfonic acid compound include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, salts thereof (for example, lithium methanedisulfonate and lithium 1,2-ethanedisulfonate), and anions thereof (for example, methanedisulfonic acid anion, and 1,2-ethanedisulfonic acid anion). Another example of the disulfonic acid compound is a disulfonic acid ester compound. Examples of a preferably used disulfonic acid ester compound include linear disulfonic acid esters such as an alkyl diester or an aryl diester of methanedisulfonic acid, 1,2-ethanedisulfonic acid, 1,3-propanedisulfonic acid, 1,4-butanedisulfonic acid, benzenedisulfonic acid, naphthalenedisulfonic acid, and biphenyldisulfonic acid, and cyclic disulfonic acid esters such as methylene methane disulfonic acid ester, ethylene methane disulfonic acid ester, and propylene methane disulfonic acid ester. Methylene methane disulfonic acid ester (MMDS) is particularly preferably used.

The nonaqueous electrolyte secondary battery according to the present embodiment is usually sealed by a package. Sealing means packing a nonaqueous electrolyte secondary battery element with a package material so as not to at least partly contact the outside air. The package of the nonaqueous electrolyte secondary battery is a casing or a bag-shaped container constituted by a flexible material, which has gas barrier properties and can seal a nonaqueous electrolyte secondary battery element. Examples of a suitably usable package include an aluminum can, and an aluminum laminate sheet that contains stacked aluminum foil and polypropylene. That is, any material may be used as the package, as long as it is a material that does not allow the nonaqueous electrolyte to exudate externally. For the package, a laminated film can be used. The laminated film has as its outermost layer a heat-resistant protective layer such as polyester, polyamide, or liquid crystal polymers. Also, the laminated film has, as its innermost layer, a sealant layer constituted by a thermoplastic resin which contains acid-modified polyethylene such as polyethylene, polypropylene, ionomer, or maleic acid-modified polyethylene, acid-modified polypropylene such as maleic acid-modified polypropylene, polyethylene terephthalate (PET), polyethylene naphthalate (PEN), polyethylene isophthalate (PEI), a blend of PET and PEN, a blend of PET and PEI, polyamide resin, a blend of polyamide resin and PET, or a blend of xylylene group-containing polyamide and PET. The package to be used can be formed with one of these laminated films. Alternatively, a plurality of these laminated films may be combined, adhered or welded, and then multilayered to form a package to be used. Aluminum, tin, copper, nickel, or stainless steel can be used as a gas barrier metal layer. The thickness of the metal layer is preferably 30 to 50 $\mu$m. Particularly suitably, an aluminum laminate, which is a stack of aluminum foil and a polymer such as polyethylene or polypropylene, can be used.

The nonaqueous electrolyte secondary battery according to the present embodiment can be in various forms including a coin-type battery, a laminate-type battery, and a wound-type battery.

Examples

The present embodiment has been described above. Hereinafter, the present embodiment will be further specifically described with reference to examples. The above-described embodiments and the below-described examples are merely exemplary explanations of the present embodiment. The gist of these examples is not merely to limit the technical scope of the present embodiment to the structure of a specific embodiment or a concrete example.

[Example 1]

(Preparation of positive electrode)

A positive electrode mixture was prepared by mixing $Li(Ni_{0.8}Co_{0.1}Mn_{0.1})O_2$ (96.5% by mass) as a positive electrode active substance, polyvinylidene fluoride (PVDF, 1.5% by mass) as a positive electrode binder, and carbon black (2% by mass) as a conductive agent. The positive electrode mixture was dispersed in N-methyl-2-pyrrolidone thereby to prepare a slurry for a positive electrode. This slurry for a positive electrode was uniformly applied on one surface of an aluminum current collector having a thickness of 12 $\mu$m. The thickness of the applied film was adjusted such that the initial charging capacity per unit area was 4.0 mAh/cm$^2$. The applied slurry for a positive electrode was dried and thereafter compression-molded by a roll press. At this time, the density of a layer containing the positive electrode mixture (a positive electrode mixture layer) was adjusted to 3.5 g/cm$^3$. Accordingly, a positive electrode was prepared.

(Preparation of negative electrode)

As a negative electrode active substance, SiO and black lead were used. The mass ratio between black lead and SiO in the negative electrode active substance was (80/20). A slurry for a negative electrode was prepared by dispersing, in a water solvent, an active substance (96.1% by mass), a polyacrylic acid-based binder (trade name: 10CLPAH, manufactured by FUJIFILM Wako Pure Chemical Corporation, 3.8% by mass) as a negative electrode binder, carbon nanotubes (0.1% by mass) as a conductive agent, and carboxymethyl cellulose (0.15% by mass). This slurry for a negative electrode was uniformly applied on a Cu current collector having a thickness of 8 $\mu$m. The thickness of the applied film was adjusted such that the initial charging capacity per unit area became 4.32 mAh/cm$^2$. Thereafter, the applied slurry for a negative electrode was compression-molded by a roll press. At this time, the density of a layer containing the negative electrode mixture (a negative electrode mixture layer) was adjusted to 1.65 g/cm$^3$. Accordingly, a negative electrode was prepared.

The positive electrode and negative electrode which were each cut out into 3 cm × 3 cm were disposed so as to face each other via a separator. The used separator was a microporous polyethylene film that has a thickness of 10 $\mu$m and contains a ceramic coat on both surfaces.

A nonaqueous electrolytic solution was prepared by mixing an organic solvent and a supporting salt. Ethylene carbonate (EC) and dimethyl carbonate (DEC) were mixed such that the volume ratio became 3/7. Furthermore, lithium hexafluorophosphate ($LiPF_6$) was added as the supporting salt. The added amount of the supporting salt was adjusted such that the concentration thereof was 1 mol/L. To the thus prepared nonaqueous electrolytic solution, fluoroethylene carbonate (FEC) was further added. The added amount of the FEC was adjusted such that the concentration thereof was 2 wt%.

The above-described positive electrode, negative electrode, separator, and nonaqueous electrolytic solution were placed in a laminated package. Thereafter, the laminate was sealed. In this manner, a lithium ion secondary battery as a nonaqueous electrolyte secondary battery was prepared. A tab was connected to each of the positive electrode and the negative electrode. This tab allowed for an electrical contact of the nonaqueous electrolyte secondary battery with the outside of the laminate.

[Evaluation of lithium ion secondary battery]

For each of the lithium ion secondary batteries used in Examples and Comparative Examples, the capacity maintenance ratio and the decrease in average voltage during discharging at 1 C were measured. Based on the obtained measurement values, the lithium ion secondary battery was evaluated.

(Initial properties)

The prepared battery was charged at 7.2 mA. After the upper limit voltage reached 4.2 V, the battery was charged at a constant voltage until the total charging time became 12 hours. Thereafter, the battery was discharged at a constant current until the lower limit voltage at 7.2 mA became 2.5 V. After charged again under the same condition, the battery was left to stand in a constant temperature bath at 45°C for 3 days. Thereafter, the battery was discharged again under the same condition. The same charging and discharging were further repeated once more. Based on the capacity and average voltage at the last discharging, the prepared battery was evaluated. After this evaluation ended, the thickness of the laminate-type battery (hereinafter, sometimes merely referred to as the "cell") was measured.

From the thickness of the cell, the unit component of the laminate-type battery was calculated. Specifically, the total of the thickness of the positive electrode mixture layer, the thickness of the half of the positive electrode current collector, the thickness of the separator, the thickness of the negative electrode mixture layer, and the thickness of the half of the negative electrode current collector was calculated. More specifically, the thickness of the laminate, the half of the thickness of the positive electrode current collector, and the half of the thickness of the negative electrode current collector were subtracted from the thickness of the cell.

The energy density of the portion of the unit component of the laminate-type battery was calculated according to the calculation formula below:

$$[(\text{capacity at discharging of cell}) \times (\text{average voltage at discharging of cell})]/[(\text{area of electrode}) \times (\text{total of thickness of positive electrode mixture layer,}$$

$$\text{thickness of half of positive electrode current collector, thickness of separator, thickness}$$

$$\text{of negative electrode mixture layer, and thickness of half of negative electrode current}$$

$$\text{collector})].$$

(Capacity maintenance ratio)

The prepared battery was placed in a constant temperature bath at 45°C and charged at 30 mA. After the upper limit voltage reached 4.2 V, the battery was charged at a constant voltage until the total charging time became 2.5 hours. Thereafter, the battery was discharged at a constant current until the lower limit voltage 2.5 V at 30 mA was reached. This charging and discharging were repeated 100 times. A ratio between a capacity at the 100th discharging and a capacity at the first discharging was defined as a capacity maintenance ratio after 100 cycles.

SiO mixed with black lead was used. Specifically, each of the following three SiO's (SiO_1, SiO_2, and SiO_3) was mixed with black lead.

SiO_1: SiO containing no Li in an initial state
SiO_2: SiO previously doped with Li in an amount of 8wt% to SiO
SiO_3: SiO previously doped with Li in an amount of 10wt% to SiO

Also, the following two CNT's (CNT_1 and CNT_2) were used.

CNT_1: CNT having a cross-sectional diameter of about 2 nm

CNT_2: CNT having a cross-sectional diameter of about 12 nm

The following tables illustrate evaluation results of secondary batteries of Comparative Examples and Examples, which were prepared by the same method as Example 1, except that the ratio between black lead and SiO, the type and composition of the binder, the type and usage of CNT used as the conductive material, or the type of SiO was different. In the tables, the "SiO ratio" is the ratio (unit: %) of SiO relative to the total mass of black lead and SiO. Other values expressed in % are all the ratio relative to the total solid content mass of the negative electrode active substance layer.

[Table 1] Type and battery performance of negative electrode for nonaqueous electrolyte secondary batteries (Examples)

| | SiO | | Binder | | CNT | | CNC added amount [%] | Energy density [Wh/L] | Capacity maintenance ratio after 100 cycles [%] |
|---|---|---|---|---|---|---|---|---|---|
| | Type | Ratio [%] | Type | Composition [%] | Type | Added amount [%] | | | |
| Example 1 | SiO_3 | 20 | PAA | 3.00 | CNT_1 | 0.10 | 0.15 | 875 | 97.20 |
| Example 2 | SiO_3 | 15 | PAA | 3.80 | CNT_1 | 0.10 | 0.15 | 840 | 97.00 |

(continued)

|  | SiO | | Binder | | CNT | | CNC added amount [%] | Energy density [Wh/L] | Capacity maintenance ratio after 100 cycles [%] |
|---|---|---|---|---|---|---|---|---|---|
|  | Type | Ratio [%] | Type | Composition [%] | Type | Added amount [%] | | | |
| Example 3 | SiO_3 | 20 | PAA | 3.50 | CNT_1 | 0.10 | 0.15 | 875 | 96.80 |
| Example 4 | SiO_3 | 20 | PAA | 2.50 | CNT_1 | 0.10 | 0.15 | 869 | 96.60 |
| Example 3 | SiO_3 | 20 | PAA | 3.80 | CNT_1 | 0.10 | 0.15 | 873 | 95.60 |
| Example 6 | SiO_3 | 20 | PAA | 3.80 | CNT_1 | 0.10 | 1.15 | 876 | 95.20 |
| Example 7 | SiO_3 | 40 | PAA | 5.00 | CNT_1 | 0.20 | 0.30 | 916 | 94.00 |
| Example 8 | SiO_2 | 40 | PAA | 6.00 | CNT_1 | 0.20 | 0.30 | 885 | 92.10 |
| Example 8 | SiO_2 | 40 | PAA | 5.00 | CNT_1 | 0.20 | 0.30 | 914 | 91.90 |
| Example 10 | SiO_1 | 60 | PAA | 7.00 | CNT_1 | 0.05 | 0.08 | 875 | 91.80 |
| Example 11 | SiO_1 | 60 | PAA | 8.00 | CNT_1 | 0.05 | 0.08 | 881 | 91.60 |
| Example 12 | SiO_1 | 60 | PAA | 6.00 | CNT_1 | 0.05 | 0.08 | 902 | 90.30 |
| Example 13 | SiO_2 | 60 | PAA | 6.00 | CNT_1 | 0.10 | 0.15 | 934 | 87.10 |

[Table 2] Type and battery performance of negative electrode for nonaqueous electrolyte secondary batteries (Comparative Examples)

|  | SiO | | Binder | | CNT | | CNC added amount [%] | Energy density [Wh/L] | Capacity maintenance ratio after 100 cycles [%] |
|---|---|---|---|---|---|---|---|---|---|
|  | Type | Ratio [%] | Type | Composition [%] | Type | Added amount [%] | | | |
| Comp. Ex. 1 | SiO_1 | 10 | PAA | 3.00 | - | 0.00 | 0.00 | 817 | 86.20 |
| Comp. Ex. 2 | SiO_1 | 10 | SBR | 2.00 | - | 0.00 | 1.00 | 780 | 76.90 |
| Comp. Ex. 3 | SiO_2 | 80 | PAA | 6.00 | CNT_1 | 0.10 | 0.15 | 936 | 80.90 |
| Comp. Ex. 4 | SiO_2 | 80 | PAA | 8.00 | CNT_1 | 0.10 | 0.15 | 964 | 80.80 |
| Comp. Ex. 5 | SiO_2 | 80 | PAA | 10.00 | CNT_1 | 0.10 | 0.15 | 930 | 75.60 |
| Comp. Ex. 6 | SiO_2 | 60 | PAA | 10.00 | CMT_1 | 0.10 | 0.15 | 899 | 73.10 |

The nonaqueous electrolyte secondary batteries including the negative electrode for nonaqueous electrolyte secondary batteries of Examples are high in energy density and capacity maintenance ratio. On the other hand, in the nonaqueous electrolyte secondary batteries including the negative electrode for nonaqueous electrolyte secondary batteries of Comparative Examples, it was observed that one of the energy density and the capacity maintenance ratio decreased. That is, in the nonaqueous electrolyte secondary batteries of Comparative Examples, both the energy density and the life could not be improved. The energy density and cycle capacity maintenance ratio of the nonaqueous electrolyte secondary battery can be improved by adjusting the ratio of SiO in the negative electrode and the ratio of the binder relative to the total solid content mass of the negative electrode active substance layer.

It is noted that in comparison between the negative electrode for nonaqueous electrolyte secondary batteries in which SiO previously doped with Li (SiO_2 and SiO_3) was used and the negative electrode for nonaqueous electrolyte secondary batteries in which SiO containing no Li in an initial state (SiO_1) was used, a difference was somewhat observed in the capacity maintenance ratio of the nonaqueous electrolyte secondary battery. This demonstrates that SiO previously doped with Li can be used as a more suitable negative electrode active substance material.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1.  A negative electrode for nonaqueous electrolyte secondary batteries comprising:

    a negative electrode active substance layer that includes a negative electrode active substance; and
    a binder, wherein
    the negative electrode active substance includes a silicon-based active substance that contains SiOx (wherein, x is a number satisfying $0.5 \leq x \leq 1.6$), and a carbon-based active substance,
    the binder contains a poly(meth)acrylic acid, a metal salt of poly(meth)acrylic acid, an alkyl ester of poly(meth)acrylic acid, or a mixture of multiple compounds selected from these compounds,
    a content of the silicon-based active substance relative to a total solid content of the negative electrode active substance layer is more than 10% by mass to less than 80% by mass, and
    a content of the binder relative to a total solid content of the negative electrode active substance layer is 2% by mass or more to less than 10% by mass.

2.  The negative electrode for nonaqueous electrolyte secondary batteries according to claim 1,
    wherein the carbon-based active substance includes natural black lead, artificial black lead, hard carbon, soft carbon, or a mixture of multiple active substances selected from these active substances.

3.  The negative electrode for nonaqueous electrolyte secondary batteries according to claim 1 or 2, wherein

    a content of the silicon-based active substance relative to a total solid content of the negative electrode active substance layer is 15% by mass or more to 60% by mass or less, and
    a content of the binder relative to a total solid content of the negative electrode active substance layer is 2.5% by mass or more to 8% by mass or less.

4.  The negative electrode for nonaqueous electrolyte secondary batteries according to claim 1 or 2, wherein

    a content of the silicon-based active substance relative to a total solid content of the negative electrode active substance layer is 15% by mass or more to 40% by mass or less, and
    a content of the binder relative to a total solid content of the negative electrode active substance layer is 2.5% by mass or more to 6% by mass or less.

5.  The negative electrode for nonaqueous electrolyte secondary batteries according to claim 1 or 2, wherein

    a content of the silicon-based active substance relative to a total solid content of the negative electrode active substance layer is 15% by mass or more to 20% by mass or less, and

a content of the binder relative to a total solid content of the negative electrode active substance layer is 2.5% by mass or more to 3.8% by mass or less.

6. The negative electrode for nonaqueous electrolyte secondary batteries according to any one of claims 1 to 5, wherein the negative electrode active substance layer further includes carbon nanotubes.

7. The negative electrode for nonaqueous electrolyte secondary batteries according to claim 6, wherein the carbon nanotubes are single-walled carbon nanotubes.

8. The negative electrode for nonaqueous electrolyte secondary batteries according to claim 6 or 7, wherein a content of the carbon nanotubes relative to a total solid content of the negative electrode active substance layer is 0.01% by mass or more to 1% by mass or less.

9. The negative electrode for nonaqueous electrolyte secondary batteries according to any one of claims 1 to 8, wherein the binder further includes carboxymethyl cellulose or a metal salt of carboxymethyl cellulose.

10. The negative electrode for nonaqueous electrolyte secondary batteries according to any one of claims 1 to 9, wherein the silicon-based active substance further includes a lithium silicon compound.

11. A nonaqueous electrolyte secondary battery, comprising at least:

the negative electrode for nonaqueous electrolyte secondary batteries according to any one of claims 1 to 10;
a positive electrode for nonaqueous electrolyte secondary batteries;
a separator; and
a nonaqueous electrolyte.

Europäisches
Patentamt

European
Patent Office

Office européen
des brevets

**EUROPEAN SEARCH REPORT**

Application Number

EP 23 15 9646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 148 751 A (SOUND NEW ENERGY TECH DEVELOPMENT CO LTD) 20 August 2019 (2019-08-20) | 1-9,11 | INV. H01M4/04 H01M4/36 |
| A | * examples 1-3 * | 10 | H01M4/38 H01M4/583 |
| X | WO 2021/128196 A1 (NINGDE AMPEREX TECHNOLOGY LTD [CN]) 1 July 2021 (2021-07-01) | 1-4,6-9, 11 | H01M4/62 H01M10/0525 H01M4/02 |
| A | * examples 9,10 * | 5,10 | |
| X | CN 109 148 886 A (HEFEI GUOXUAN HIGH TECH POWER ENERGY CO LTD) 4 January 2019 (2019-01-04) | 1-4,11 | |
| A | * examples 1-3 * | 5-10 | |
| X | JP 2011 076741 A (SUMITOMO BAKELITE CO) 14 April 2011 (2011-04-14) | 1-4,6,9, 11 | |
| A | * examples 4,5 * | 5,7,8,10 | |
| X | WO 2021/226842 A1 (NINGDE AMPEREX TECHNOLOGY LTD [CN]) 18 November 2021 (2021-11-18) | 1,2,9,11 | TECHNICAL FIELDS SEARCHED (IPC) |
| A | * examples * | 3-8,10 | H01M |

The present search report has been drawn up for all claims

| Place of search | Date of completion of the search | Examiner |
|---|---|---|
| Munich | 30 August 2023 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9646

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2023

| Patent document cited in search report | | Publication date | Patent family member(s) | | Publication date |
|---|---|---|---|---|---|
| CN 110148751 | A | 20-08-2019 | NONE | | |
| WO 2021128196 | A1 | 01-07-2021 | US | 2022223850 A1 | 14-07-2022 |
| | | | WO | 2021128196 A1 | 01-07-2021 |
| CN 109148886 | A | 04-01-2019 | NONE | | |
| JP 2011076741 | A | 14-04-2011 | JP | 5593663 B2 | 24-09-2014 |
| | | | JP | 2011076741 A | 14-04-2011 |
| WO 2021226842 | A1 | 18-11-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015198038 A

- WO 2021053951 A